## Europäisches Patentamt
(19) **European Patent Office**
**Office européen des brevets**

(11) Publication number: **0 002 374**
**B1**

(12) # EUROPEAN PATENT SPECIFICATION

(45) Date of publication of patent specification: **12.08.81**

(51) Int. Cl.³: **F 24 J 3/02**

(21) Application number: **78300723.0**

(22) Date of filing: **01.12.78**

(54) **Radiation collector.**

(30) Priority: **05.12.77 GB 5051277**

(43) Date of publication of application:
**13.06.79 Bulletin 79/12**

(45) Publication of the grant of the European patent:
**12.08.81 Bulletin 81/32**

(84) Designated Contracting States:
**CH DE FR GB IT**

(56) References cited:
**CH - A - 593 463**
**DE - A - 2 533 530**
**DE - A - 2 544 915**
**DE - A - 2 618 187**
**FR - A - 2 319 089**

(73) Proprietor: **Exxon Research and Engineering Company**
**P.O.Box 390 200 Park Avenue**
**Florham Park New Jersey 07932 (US)**

(72) Inventor: **Moss, Gerald**
**"Trevose" Sarajac Avenue**
**East Challow Wantage, Oxfordshire (GB)**

(74) Representative: **Field, Roger Norton et al,**
**Hanover Court 5 Hanover Square**
**London W1R OHQ (GB)**

Courier Press, Leamington Spa, England.

## Radiation collector

The present invention relates to a radiation collector, and more particularly to a radiation collector of the type used for collecting or recovering solar radiation. The latter type of radiation collector is usually termed a solar panel or solar heat collector.

Radiation collectors which are known and used generally comprise a body on which the radiation is received and a fluid (usually a liquid) which is passed in heat exchange relationship with the body. In some instances, radiation focussing or concentrating devices such as lenses as disclosed in Swiss Patent 593 463 or reflectors as disclosed in German OLS 2 533 530 are employed to increase the amount of radiation received by the body and recovered by the fluid.

A problem with present radiation collectors of the solar panel type, particularly in high latitudes, is that the temperature rise in the heat receiving body and the heat collecting fluid passing in heat exchange relationship therewith tends to be insufficient during the winter months for such purposes as space heating, and water heating, and too low during the summer months for air conditioning uses. Focussing devices enable higher temperatures to be attained, but such devices must track the sun's path in order to be effective. Such tracking involves the provision of suitable mechanical devices, and the latter make tracking radiation collection equipment expensive to instal and, as with any mechanical device, necessitate regular maintenance.

The present invention substantially overcomes such difficulties and provides a radiation collector comprising a plurality of conduit sections spaced from one another and at least some of them being connectible or connected to each other in series and/or in parallel to form at least part of a continuous conduit for the passage therethrough of a heat-collecting fluid; a plurality of substantially parallel cylindrical-form lenses disposed to one side of the said conduit sections and substantially parallel thereto; and a plurality of substantially parallel concave reflectors disposed on the other side of said conduit sections and substantially parallel thereto; the concave reflectors facing in a direction towards the said conduit sections and lenses, the arrangement and construction of the collector being such that, during use, radiation falling on the lenses of the collector is concentrated on the exterior surface of the conduit sections directly by the lenses and indirectly after reflection from the reflectors.

By "cylindrical-form" lens is meant any type of lens capable of forming a linear image and/or of concentrating radiation (e.g. visible light) along a straight line or band.

The lenses employed in the radiation collector of the invention may be conventional cylindrical lenses, or they may each of of the multi-prism type — e.g., Fresnel lenses. The lenses are preferably flat on the side facing away from the conduit sections thereby facilitating their cleaning.

The lenses may be formed of any suitable material, such as glass or radiation transparent plastics material. Among the latter general class of materials, silicone rubbers are particularly useful as they can be cast at relatively low temperatures into suitable radiation-concentrating shapes at relatively low cost.

Preferably, a plane at one boundary edge of a respective lens, perpendicular to the plane joining the opposite boundary edges of the respective lens, substantially intersects the central axis of a conduit section, and preferably, the said plane at the said one boundary edge of the respecting lens substantially intersects the centre-line of a reflector.

In one preferred embodiment, the boundary edges of alternate reflectors mutually adjoin each other.

In one preferred embodiment, a boundary edge of one lens adjoins a boundary edge of an adjacent lens, and in many instances, it may be convenient to form a plurality of lenses integrally (e.g. from a single piece of radiation-transparent material), in which case the boundary edge of one lens will substantially be the boundary edge of an adjacent lens. For example, a plurality of lenses may be cast as a unit from the suitable plastics material or silicone rubber. Such a unit may be attached to a rigid flat sheet of transparent material such as glass if the unit lacks adequate rigidity.

A plane at the centre-line of a respective lens, perpendicular to the plane joining opposite boundary edges of the respective lens, preferably substantially intersects the centre-line of a reflector.

In another embodiment, the reflectors whose centre-lines are substantially intersected by the said planes at the centre-lines of the lenses alternate with the reflectors whose centre-lines are substantially intersected by the said planes at the boundary edges of respective lenses, the boundary edges of alternate reflectors being mutually adjoining.

Preferably, conduit sections whose axes or centre-lines are substantially intersected by the said planes through the centre-lines of respective lenses have their axes substantially in a first plane or layer, and conduit sections whose axes are substantially intersected by the said planes at the boundary edges of respective lenses have their axes substantially in a second plane or layer. Preferably, the conduit sections having their axes or centre-lines substantially in the first plane or layer and the conduit sections having their axes or centre-lines substantially in the second plane or layer are separately connected or connectible for the passage of heat collecting fluid through respective fluid circulation circuits.

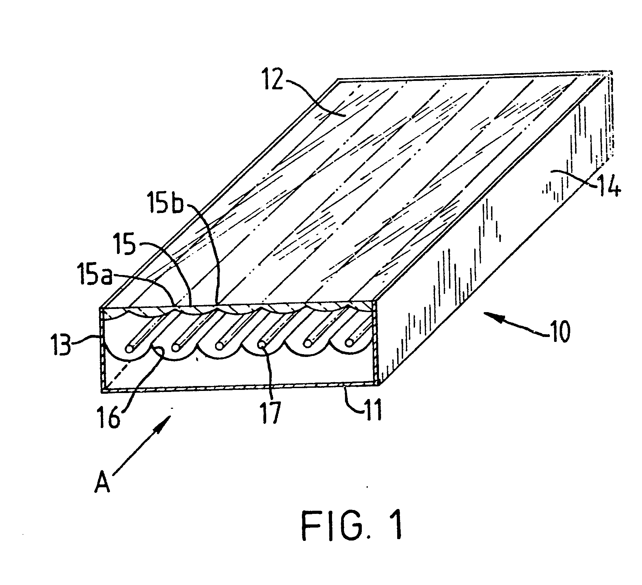

With some arrangements of the lenses, conduit sections and concave reflectors, it is possible that at some angles of receipt of radiation in the concave reflectors (the so-called "acceptance angle" of the reflector), at least some radiation in each reflector may be reflected from region to region and then reflected out of the collector without being reflected onto the surface of a corresponding conduit section. This is particularly most likely to occur by reflection of radiation through a space between the corresponding conduit section and the part of the reflector which is most distant from the layer of lenses — i.e., by reflection through the space beneath the conduit section across the bottom region of the reflector when the collector is mounted for use with the lenses uppermost and the reflectors beneath and facing the lenses. In order to avoid radiation losses from this cause, the reflectors may have a radiation-reflective ridge which extends towards, and which may (if necessary) touch, the region of the surface of the conduit section which is most distant from the layer of lenses. Such a ridge prevents the reflection of radiation between the said most distant parts (from the lens layer) of the relevant conduit section and reflector and causes substantially all the radiation received by the relevant reflector to be reflected onto the surface of the corresponding conduit section without being reflected out of the collector. Concave reflectors having configurations suitable for trapping radiation are known in the art, and are often referred to in the art as "compound reflectors". An example of a compound reflector is given in Figure 1 of an article by R. Winston in "Applied Optics", Volume 17, page 1668 (1st June 1978) where it is referred to as a "trough-like concentrator".

In radiation collectors according to the invention comprising conduit sections in two (or more) planes or layers, means may be provided for connecting, in series and/or in parallel, whichever layer of conduit sections attains a temperature (e.g. as determined from the temperature of fluid therein) which is either the highest temperature or which exceeds a selected temperature for circulation of the fluid (e.g. liquid) to a suitable heat storage facility and/or hot fluid usage means.

The radiation collector of the invention may be fixedly mounted in any suitable attitude relative to the source of radiation. For solar panels wherein all the conduit sections have their centre-lines or axes substantially in one plane or layer, it is preferred to mount the collector with the axes or centre-lines of the conduit sections in an East — West direction. When thus mounted, all of the conduit sections receive solar radiation during all daylight hours, subject solely to the optical limitations of the solar panel. These optical limitations are mainly due to the well-known fact that cylindrical lenses, particularly those of the Fresnel type, have a focal length which varies with the angle of incidence of radiation, the focal length being reduced at large angles of incidence (e.g. at dawn and dusk) and increased at small angles of incidence (e.g. at midday). Those skilled in the art will be able to provide the best relative locations of particular lenses, conduit sections and reflectors by the exercise of their ordinary knowledge of the optical characteristics of cylindrical lenses.

For solar panels wherein the conduit sections have their axes or centre-lines in two or more planes or layers, it is preferred to mount the collector with the axes or centre-lines of the conduit sections in a North — South direction. When thus mounted, a first layer of conduit sections receives concentrated radiation while a second layer may receive little or no radiation at one time of day. At another time of day, the first layer may receive little or no radiation while the second layer of conduit sections receives concentrated radiation. Of course, there may be times of day when both the first and second layers of conduit sections receive relatively concentrated radiation, depending, inter alia, upon the geometrical and optical characteristics of the reflectors.

It is preferred to mount the solar panel to receive as much radiation as possible at the highest concentrations subject to the thermodynamic considerations when the energy requirements from the panel is greatest. To this end, the panel should be mounted with an angle of tilt which depends, inter alia, on the latitude of the location of the panel and the season(s) in which the radiation — collecting properties are to be most exploited.

The solar panel may be fixedly mounted or it may be mounted so that its angle of tilt can be varied according to the time of year and the energy requirements at that time of year.

A plurality of adjoining reflectors may be made from a single piece of material which is reflective or treated to be reflected. Alternatively, each reflector may be separately formed from the adjoining reflectors either wholly or in part.

The surface of each conduit section is preferably formed and/or coated with a substance having good radiation absorption properties and low emissivity. Substances having these desirable properties are well-known and include, inter alia, finely divided materials (e.g., chrome black) wherein the distance between a raised part of one particle and an adjacent raised part of the same or another particle is less than the wavelength of the radiation to be collected, and layers of material which cause incident radiation to be partly reflected within the layers in such a way that interference occurs within the layers

5 0002374 6

thereby trapping radiation.

It is preferred that the radiation is not concentrated as a line focus on the surfaces of the conduit sections since the resultingly high temperatures could have an adverse effect on the surfaces. Instead, it is preferred that the radiation is concentrated as a band on the surfaces of the conduit sections.

Preferably, the conduit sections and the corresponding lenses and reflectors are as long as possible within the constraints imposed by the location of the radiation collector since this will reduce the numbers of conduit sections required for a given energy requirement. The advantage of having a relatively small number of conduit sections arises from the fact that straight conduit sections are relatively cheap, and that the greater the number of conduit sections, the greater will be the numbers of connections at the ends of pairs of conduit section for the flow of heat collecting fluid. The end connections play no part in collecting radiation (indeed, they are preferably shaded from radiation), and the more end connections there are, the greater will be the cost of the radiation collector for a given energy output.

The radiation collector of the invention enables radiation to be collected over a relatively wide range of incident angles with a relatively high efficiency and without the necessity of providing means enabling the collector to follow or track the source of radiation, although the collector may be provided with means for making adjustments to its attitude so that, for example, it provides energy for air conditioning in summer and for space heating in winter.

The invention is now further described with reference to the accompanying drawings which show diagrammatically the principal features of solar radiation collectors, hereinafter referred to as "solar panels", and in which:—

Figure 1 is a simplified isometric view of a first type of embodiment of a solar panel according to the invention, with parts broken away to show the principal internal components thereof and the general mode of construction and arrangement;

Figure 2 is a schematic and diagrammatic cross-sectional view of the panel of figure 1 as seen when looking in the direction of arrow A of figure 1;

Figure 3 is a simplified isometric view of a second type of embodiment of a solar panel according to the invention with parts broken away to show the principal internal components thereof and general mode of construction and arrangements;

Figure 4 is a schematic diagrammatic cross-sectional view of the panel of figure 3 as seen when looking in the direction of arrow B of figure 3;

Figure 5 is a schematic diagram illustrating the general arrangement of a solar panel of the invention with associated equipment; and

Figure 6 is a schematic diagram similar to that of figure 5 but for a different general arrangement.

Referring first to figure 1, the panel 10 has the outside form of a parallelopiped, the bottom wall 11 and top wall 12 being of considerably greater size than the side walls 13 and 14. The bottom and side walls 11, 13 and 14 are made of opaque materials which are preferably of low thermal conductivity, and they may be lagged to reduce heat losses therethrough.

The top wall 12 is transparent to the radiation which is to be collected (e.g. solar radiation) and may be formed from one or more radiation transparent layers to reduce heat losses from the interior of the panel. As depicted for simplicity of illustration, however, and in preferred embodiment the top wall 12 is shown as being formed from a single layer (which may be a composite layer) which is substantially flat on the outside of the panel and comprised of a succession of substantially parallel cylindrical lenses 15 on the inside of the panel.

Between the top wall 12 and the bottom wall are a succesion of substantially parallel concave reflecting elements ("reflectors") 16 which are concave on their reflecting surfaces which face the top wall 12, the reflectors 16 being substantially parallel to the cylindrical lenses 15. Between the cylindrical lenses 15 and the reflectors 16 are a plurality of conduit or pipe sections 17 which are substantially parallel to the lenses 15 and reflectors 16, and connected or connectible in one or more circuits in parallel or series or series/parallel for the passage therethrough of a suitable heat collecting liquid.

In the embodiment depicted in figure 1, the width of each reflector 16 is substantially equal to the width of each lens 15, and the reflectors 16 and lenses 15 are laterally offset relative to each other so that a plane perpendicular to the plane joining the opposite boundary edges 15$a$, 15$b$ of a lens 15 (i.e. a plane parallel to the normal of a lens 15) substantially intersects the centre-line of a reflector 16 where the reflector 16 is symmetrical about its centre-line.

The said plane parallel to the normal of each lens 15 also intersects the centre-line or axis of a pipe section 17. The relative lateral offsets and dispositions of lenses 15, reflectors 16 and pipe-sections 17 may be different for different optical systems in which one or both of the lens 15 and reflector 16 is/are asymmetrical about the respective geometrical centre-lines or central plane without departing from the invention provided that the resulting solar panel achieves the same advantageous effects as those described herein with reference to the illustrative embodiments.

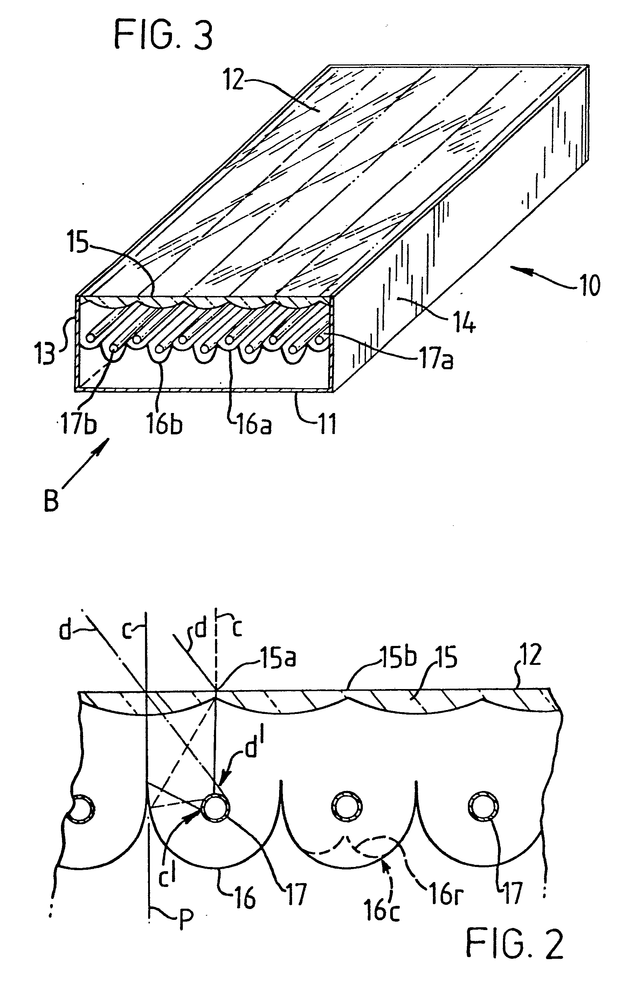

The manner in which the panel 10 of figure 1 work is now described with reference to figure 2, wherein P designates one of the normal planes, which is perpendicular to the plane (e.g. the plane of side 12) joining the opposite boundary edges 15a, 15b of a respective lens 15. Light rays c, c from a distant source (i.e. parallel light rays) impinging normally on the surface 12, i.e., parallel to plane P, are refracted as they pass through the lenses 15 so as to be convergent. The refracted rays c, c are reflected by the reflectors 16 and are concentrated on the surface of each of the pipe sections 17 over a narrow band $C^1$. It will be appreciated that if the positions of the pipe sections 17 were such that the surfaces thereof were in the focal planes of the radiation-concentrating system comprising the lenses 15, the rays would be concentrated on the surface of the pipe sections 17 in a line focus. However, although the latter arrangement is within the ambit of the present invention, it is less preferred because many efficient radiation-absorbing surface coatings are damaged by exposure to excessively high local temperatures and therefore, in most instances, it is more preferred to concentrate the light in a band as indicated by $C^1$ of figure 2.

When light rays impinge on the surface 12 at a non-normal angle of incidence, as indicated by rays d, d, the rays may be concentrated by the lenses 15 directly on the surfaces of the pipe sections 17 as a band d' without reflection by the reflectors 16. It will be appreciated that the panel 10 of figures 1 and 2 is preferably tilted so that light impinges normally, or approximately normally, on the surface 12 during the part of the year when the energy requirement from the panel 10 for a particular energy-consuming function is highest. Thus, if the panel is to provide energy for space heating during winter months, it would be tilted to an angle at which solar radiation would be concentrated on the pipe sections 17 during the winter months.

Referring once again to Figure 1, the reflectors 16 may be formed from metal with a suitably polished upper concave face or with a suitable reflecting material applied thereto. A plurality of metal reflectors may be formed as a unitary body from a single metal sheet. The metal reflectors may be self-supporting or more preferably supported by insulating material (not shown) such as foamed polyurethane disposed in the space between the bottom wall 11 and the underside of the reflectors 16. Alternatively, the reflectors 16 may be formed from a polyurethane or like plastics material which is provided with a reflective coating or film on the concave upper surfaces. The polyurethane or other plastics material preferably fills the space between the reflecting surfaces and the bottom wall 11. Although the foregoing constructions are not illustrated, those skilled in the art will know how to make such constructions.

For convenience, the space between the lenses 15 and the reflectors 16 may be occupied by air and a vent hole (not shown) provided to accommodate changes in the volume of the air due to changes in temperature. The vent preferably is provided with a suitable filter (not shown) to prevent the entrance of dust into the solar panel. The mode of construction of a suitable vent hole and filter will be known to those skilled in the art.

In some arrangements of lenses 15, reflectors 16 and pipe sections 17, it is possible that light concentrated on the reflectors 16 by the lenses is reflected out of the panel without falling on the pipe sections. This is most likely to occur by reflection of concentrated light from one part of a reflector 16 along a path between the bottom of the pipe section 17 and the bottom of the reflector to another part of the reflector, from where the light is reflected out of the panel. This could occur, for example, at a time when the incident angle of light is between the incident angles of rays d and rays c. If routine optical and geometric considerations indicate that such re-radiation could occur, the reflectors 16 might have the form of a compound reflector (referred to above) provided with a reflective ridge extending towards, and possibly touching, the "bottom" of the pipe section. Such a compound reflector is shown by way of example in dotted lines for one reflector 16c of figure 2 to form a ridge indicated by 16r. Other types of compound reflector known in the art may be employed to suit the operating conditions and geometric and optical forms of, and constraints on, the panel.

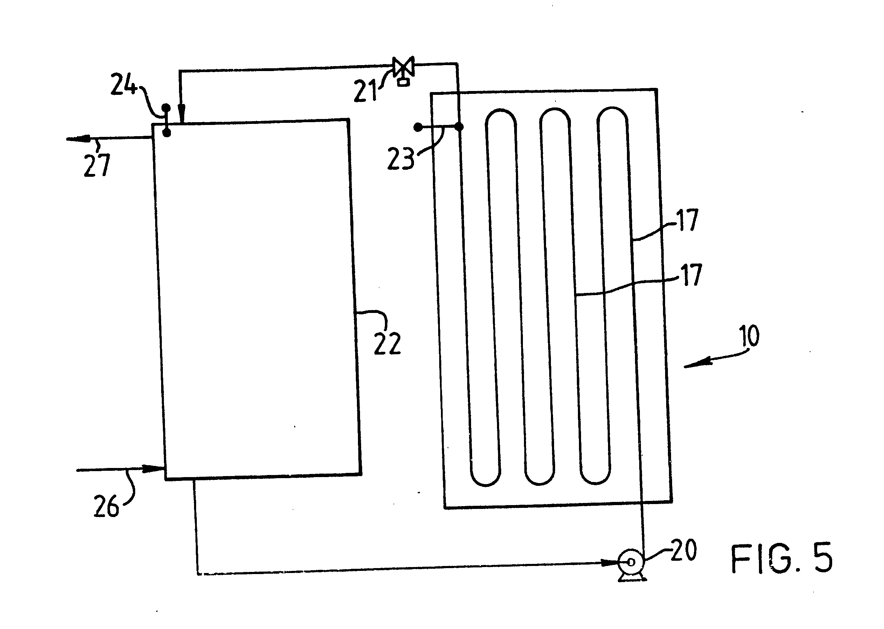

Reference is now made to figure 5 which shows the general arrangements of the panel 10 with part of an energy storage/utilization system. The pipe sections 17 are joined at their adjacent ends by bends to form a single serpentine fluid flow path through the panel 10. The bends are shaded and preferably insulated to prevent energy losses from the fluid therein. The fluid employed is preferably a liquid and for relatively low temperature uses and at more elevated temperatures when the fluid circulation conduits are capable of withstanding relatively elevated pressures, the liquid may be water with suitable additives (if necessary) to reduce and/or inhibit corrosion and to reduce the freezing temperature. For higher temperature uses, an organic liquid composition may be employed. Such a composition may be a single organic compound or a mixture of organic compounds, including (if necessary) suitable additives to reduce and/or inhibit degradation of the compound(s) and deposition in the liquid flow circuit.

The liquid is circulated through the pipe sections 17 by a pump 20, and heated liquid passes via a valve 21 to a suitable storage tank 22, cool liquid being withdrawn from the tank 22 and circulated to the pump 22. A liquid is passed into and out of the tank 22 via conduits 26, 27 to recover heat and/or to supply make-up for liquid circulated in the panel 10. The temperature of liquid circulating in the pipe sections 17 of the panel 10 is determined by a probe 23 and the temperature of liquid in the tank 22 is determined by a probe 24. The rate of liquid circulation may be controlled, e.g. according to the energy demand, by varying the setting of valve 21, and if the temperature as detected by probe 24 exceeds that as detected by probe 23, the pump may be stopped. Control systems for effecting the foregoing examplary modes of operation are known to those skilled in the art.

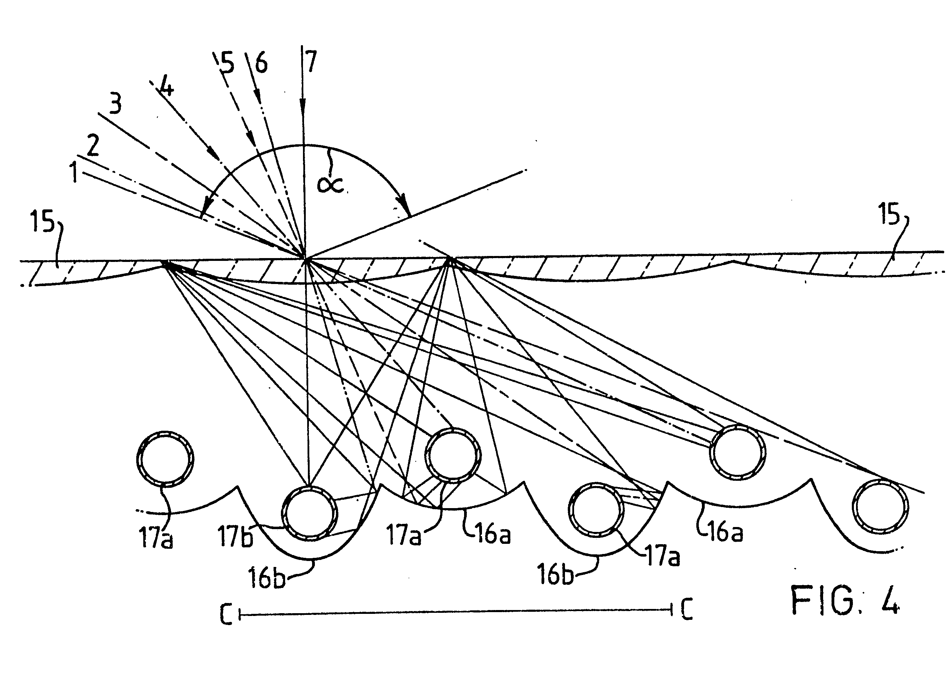

Reference is now made to the embodiment of figures 3 and 4, which may be regarded as a variant of the embodiment of figures 1 and 2, and in which each of the concave reflectors 16 has a width (measured across the widest part) of half the width of each lens 15. Each reflector 16a whose centre-line is intersected by a plane passing through the boundary edge of a lens 15 and parallel to the normal to the lens 15 alternates with a reflector 16b whose centre-line is intersected by a plane passing through the centre-line of a lens 15 and parallel to the normal to the lens 15. The reflectors 16a are not as deeply recessed as the reflectors 16b. A pipe section 17a is disposed relative to each reflector 16a for receiving concentrated radiation either directly from a lens 15 or indirectly after reflection from the reflector 16a in the manner described with reference to figures 1 and 2. A pipe section 17b is disposed relative to each reflector 16b for receiving concentrated radiation either directly from a lens 15 or indirectly after reflection from the corresponding reflector 16b. In practice, the pipe sections 16a are disposed with their axes in one plane or layer parallel to the top plane of the lenses 15, and the pipe sections 17b are disposed with their axes in a second plane or layer parallel to the top plane of the lenses 15, but more distant therefrom than the plane of the axes of the pipe sections 17a. The plane of the axes of the pipe sections 17a is nearer to the lenses 15 than their focal plane, and the plane of the axes of the pipe sections 17b is further from the lenses than their focal plane. The advantage of this embodiment is that the panel 10 can receive radiation over a larger range of incident angles than can the embodiment of figures 1 and 2, and to make the best use of this advantage, it is preferred to mount the panel 10 with the pipe sections in a North — South direction. The panel 10 is tilted as appropriate to collect radiation at the greatest efficiency during the period when the panel 10 is intended to provide energy.

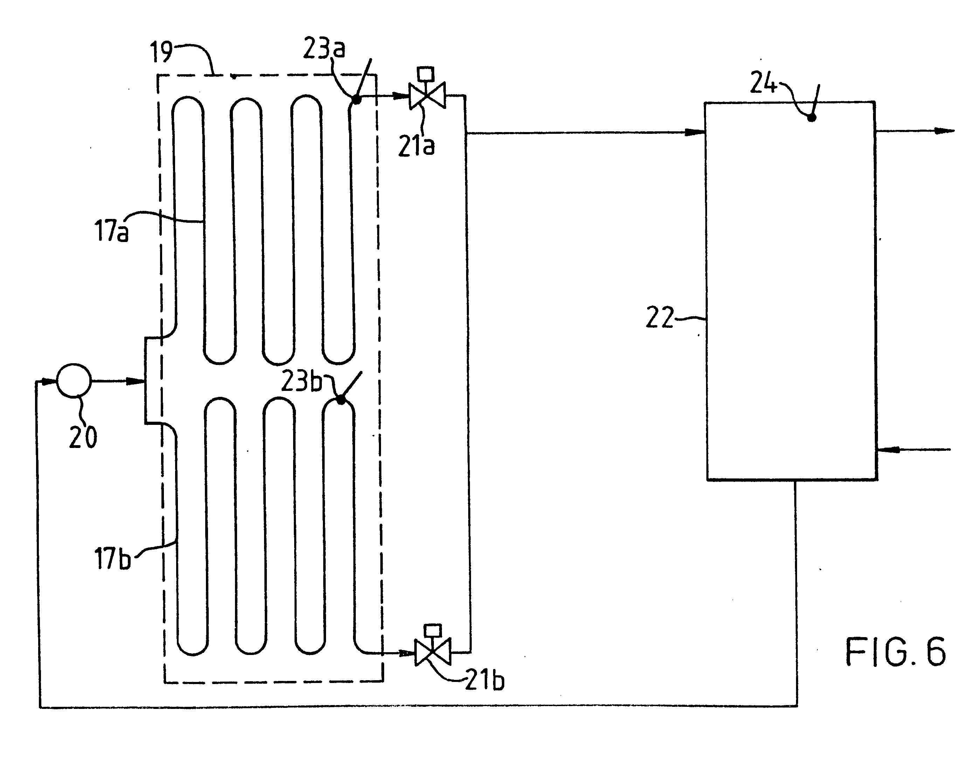

Figure 4 shows more particularly the mode of operation of the panel 10 of figure 3 when mounted "North — South". It is seen that as the angle of incidence of radiation (e.g. sunlight) changes from angle 1 to angle 7, the radiation is concentrated by the lenses on the pipe sections 17a at angles 1, 2, 4 and 5, and on the pipe sections 17b at angles 3, 6 and 7. Concentrated radiation is directed onto the pipe sections 17a, 17b either onto the "upper" surfaces thereof directly from the lenses or onto the "lower" surfaces thereof after reflection from a respective reflector 16a or 16b as will be apparent from the radiation paths indicated in the portion above the line C—C of figure 4. According to the design of the panel 10 of figure 3, it will be appreciated that radiation may be received by one set of pipe sections 17a, 17b at a time or there may be a relatively short overlap period during which radiation is received by both sets of pipe sections 17a, 17b. When only one set of pipe sections receives radiation, the other set may be inactivated by interrupting fluid flow therethrough as described below with reference to figure 6, or alternatively, the other set may continue to receive at least some fluid flow in order to regulate the temperature of the fluid by re-radiating energy out of the panel 10.

One or both sets of reflectors 16a, 16b may be formed from compound reflectors (as described above), and may be of the type described in relation to figure 2.

The tracking of the radiation is symmetrical and a wide tracking angle alpha is achieved without the necessity of altering the disposition of the panel as a whole or of parts thereof. Moreover, the amount of metal required for the panel 10 of figure 3 is considerably less than for previously-known types of panel adapted for North — South mounting, and if the pipe sections are of ordinary piping, the overall cost of the panel is relatively low. However, the amount of metal, and the cost of the panel, exceeds that of the figure 1 embodiment.

Figure 6 shows the general arrangement of the liquid flow circuits for the panel of figure 3. The "upper" pipe sections 17a (i.e., the conduit sections nearest to the lenses 15) are connected to each other in series by suitable bends to form one serpentine flow path, and the "lower" pipe sections 17b are connected in series by suitable bends to form another serpentine path. The panel as a whole is indicated by the broken line outline 19, and it will be appreciated that each bend connecting each pipe section 17a or 17b in series to the next pipe is shaded from the incident radiation and insulated so as to prevent heat losses by, e.g., radiation from the bends. Each series of pipe sections 17a, 17b forms part of one or two alternative flow circuits comprising a common pump 20, respective solenoid valves 21a and 21b, a common storage tank 22 and suitable interconnecting piping. The alternative flow circuits are activated by either temperature or radiation detectors, e.g. by thermocouples 23a or 23b so connected, by any means which will be known to those skilled in the art, that the solenoid valve 21a is arranged to be operated to circulate heat collecting liquid when a solenoid valve 21a or 21b is opened, but preferably an over-ride control (not shown), of any type known to those skilled in the art, is provided to interrupt operation of the pump when the temperature in the storage tank 22 is higher than the temperature of the hottest pipes of the collector. The over-ride may be responsive to a thermocouple 24 associated with the storage tank 22.

One of the problems encountered with some previously-known solar panels is that the heat collecting fluid may become excessively hot under some operating conditions. The panel of figures 3 and 4 may be adapted to avoid such overheating by providing that some heat-collecting liquid flows through the set of pipe sections 17a or 17b which is not receiving concentrated radiation from the lenses 15 and reflectors 16. The non-irradiated ("redundant") pipe sections re-radiate energy out of the panel and may thereby be employed to cool any liquid passed therethrough. Preferably, the diversion of some liquid to flow through the redundant pipe sections is effected automatically in response to an excessively high temperature-signal from any of the thermocouples (e.g. 23a, 23b), which signal causes a regulated amount of opening of the solenoid valve 21a, 21b controlling the flow of liquid to the redundant pipe sections 17a, 17b. The manner in which the opening and closing of the solenoid valves 21a, 21b in response to a signal indicative of an excessively high temperature will be apparent to those skilled in the relevant art.

Although the foregoing two embodiments show panels having respectively one "layer" of pipe sections and reflectors (figures 1 and 2) and two such "layers" (figures 3 and 4), it is within the scope of the invention to provide three or more such layers. With more layers, the panel and its associated equipment will be more costly, but its tracking angle will be increased. Features which are described in relation to one embodiment may be employed in other embodiments within departing from the invention.

## Claims

1. A radiation collector comprising a plurality of conduit sections (17) spaced from one another and at least some of them being connected or connectible in series and/or in parallel to form at least part of a continuous conduit for the passage therethrough of a heat collecting fluid, characterised by the combination of a plurality of substantially parallel cylindrical-form lenses (15) disposed on one side of said conduit sections (17) and substantially parallel thereto with a plurality of substantially parallel concave reflectors (16) disposed on the other side of the conduit sections (17) and substantially parallel thereto, the concave reflectors (16) facing in a direction towards said conduit sections (17) and lenses (15), the arrangement and construction of the collector being such that, during use, radiation falling on the lenses (15) is concentrated on the exterior surface of the conduit sections (17) directly by the lenses (15) and indirectly after reflection from the concave reflectors (16).

2. A collector according to claim 1 in which the plane (P) passing through the edge (15a) of a lens (15) and parallel to the conduit sections (17) substantially intersects the central axis of a conduit section (17).

3. A collector according to claim 2 in which said plane (P) substantially intersects the centre-line of a reflector (16).

4. A collector according to claim 1 in which the plane (P) passing through the centre-line of a lens (15) and parallel to the conduit sections (17) substantially intersects the central axis of a conduit section (17).

5. A collector according to claim 4 in which said plane (P) substantially intersects the centre-line of a reflector (16).

6. A collector according to claim 5 in which the reflectors (16) whose centre-lines are substantially intersected by the said planes alternate with the reflectors (16) whose centre-lines are substantially intersected by planes at the boundary edges of respective lenses (15), the boundary edges of alternate reflectors (16) being mutually adjoining.

7. A collector according to claim 6 in which conduit sections (17) whose centres are substantially intersected by said planes through the centre-lines of respective lenses (15) have their axes substantially in a first plane or layer, and conduit sections (17) whose axes are substantially intersected by said planes at the boundary edges of respective lenses (15) have their centres substantially in a second plane or layer.

8. A collector according to claim 7 in which the conduit sections (17) having their centre-lines substantially in the first plane or layer and the conduit sections (17) having their centre-lines substantially in the second plane or layer are separately connectible or connected for the passage of heat collecting fluid through respective fluid circulation circuits.

## Revendications

1. Collecteur de rayonnement comprenant plusieurs tronçons de conduit (17) espacés les uns des autres et dont au moins certains sont reliés ou peuvent être reliés en série et/ou en parallèle pour former au moins une partie d'un conduit continu pouvant être parcouru par un fluide collecteur de chaleur, caractérisé en ce qu'il comporte plusieurs lentilles (15) de forme cylindrique, sensiblement parallèles, disposées sur un premier côté desdits tronçons (17) de conduit et sensiblement parallèles à ces derniers, et plusieurs réflecteurs concaves (16), sensiblement parallèles, disposés de l'autre côté des tronçons (17) de conduit et sensiblement parallèles à ces derniers, les réflecteurs concaves (16) étant tournés vers lesdits tronçons (17) de conduit et les lentilles (15), la disposition et la construction du collecteur étant telles que, pendant l'utilisation, un rayonnement tombant sur les lentilles (15) soit concentré sur

la surface extérieure des tronçons (17) de conduit, directement par les lentilles (15) et indirectement après réflexion sur les réflecteurs concaves (16).

2. Collecteur selon la revendication 1 dans lequel le plan (P) passant par le bord (15a) d'une lentille (15) et parallèle aux tronçons (17) de conduit coupe sensiblement l'axe central d'un tronçon (17) de conduit.

3. Collecteur selon la revendication 2 dans lequel ledit plan (P) coupe sensiblement l'axe central d'un réflecteur (16).

4. Collecteur selon la revendication 1 dans lequel le plan (P) passant par l'axe central d'une lentille (15) et parallèle aux tronçons (17) de conduit coupe sensiblement l'axe central d'un tronçon (17) de conduit.

5. Collecteur selon la revendication 4 dans lequel ledit plan (P) coupe sensiblement l'axe central d'un réflecteur (16).

6. Collecteur selon la revendication 5 dans lequel les réflecteurs (16) dont les axes centraux sont sensiblement coupés par lesdits plans alternent avec les réflecteurs (16) dont les axes centraux sont sensiblement coupés par des plans aux bords extrêmes des lentilles respectives (15), les bords extrêmes des réflecteurs alternés (16) étant jointifs entre eux.

7. Collecteur selon la revendication 6 dans lequel les tronçons (17) de conduit dont les centres sont sensiblement coupés par lesdits plans passant par les axes centraux des lentilles respectives (15) ont leurs axes situés sensiblement dans un premier plan ou une première couche, et les tronçons (17) de conduit dont les axes sont sensiblement coupés par lesdits plans, aux bords extrêmes des lentilles respectives (15), ont leurs centres situés sensiblement dans un second plan ou une seconde couche.

8. Collecteur selon la revendication 7 dans lequel les tronçons (17) de conduit ayant leurs axes centraux sensiblement dans le premier plan ou la première couche et les tronçons (17) de conduit ayant leurs axes centraux sensiblement dans le second plan ou la seconde couche peuvent être reliés ou sont reliés séparément pour permettre le passage d'un fluide collecteur de chaleur dans des circuits respectifs d'écoulement de fluide.

**Patentansprüche**

1. Strahlungskollektor mit einer Mehrzahl im Abstand zueinander angeordneten Leitungsabschnitten (17), von denen mindestens einige in Reihe und/oder parallel verbunden oder verbindbar sind, um mindestens einen Teil einer kontinuierlichen Leitung für den Durchgang eines wärmeaufnehmenden Fluids durch diese zu bilden, gekennzeichnet durch die Kombination einer Mehrzahl von im wesentlichen parallelen zylindrisch geformten Linsen (15), die an einer Seite der Leitungsabschnitte (17) und im wesentlichen parallel dazu angeordnet sind, und mit einer Mahrzahl von im wesentlichen parallelen konkaven Reflektoren (16), die an der anderen Seite der Leitungsabschnitte (17) und im wesentlich parallel dazu angeordnet sind. wobei die konkaven Reflektoren (16) in Richtung auf die Leitungsabschnitte (17) und Linsen (15) gerichtet sind, und die Konstruktion des Kollektors so ist, daß die bei Betrieb auf die Linsen (15) fallende Strahlung auf der Außenfläche der Leitungsabschnitte (17) direkt durch die Linsen (15) und indirekt nach Reflexion von den konkaven Reflektoren (16) konzentriert wird.

2. Kollektor nach Anspruch 1, bei dem die Ebene (P), die durch den Rand (15a) einer Linse (15) und parallel zu den Leitungsabschnitten (17) verläuft, im wesentlichen die Mitelachse eines Leitungabschnittes (17) schneidet.

3. Kollektor nach Anspruch 2, bei dem die Ebene (P) im wessentlichen die Mittellinie eines Reflektors (16) schneidet.

4. Kollektor nach Anspruch 1, bei dem die Ebene (P), die durch die Mittellinie einer Linse (15) und parallel zu den Leitungsabschnitten (17) verläuft, im wesentlichen die Mittelachse eines Leitungsabschnittes (17) schneidet.

5. Kollektor nach Anspruch 4, bei dem die Ebene (P) im wesentlichen die Mittellinie eines Reflectors (16) schneidet.

6. Kollektor nach Anspruch 5, bei dem die Reflektoren (16), deren Mittellinien im wesentlichen von den Ebenen geschnitten werden, mit Reflektoren (16) abwechseln, deren Mittellinien von im wesentlichen an den Rändern der entsprechenden Linsen (15) liegenden Ebenen geschnitten werden, wobei die Ränder der abwechselnden Reflektoren (16) jeweils aneinanderstoßen.

7. Kollektor nach Anspruch 6, bei dem die Leitungsabschnitte (17), deren Mitten im wesentlichen von den Ebenen durch die Mittellinie der entsprechenden Linsen (15) geschnitten werden, mit ihren Achsen im wesentlichen in einer ersten Ebene oder Schicht liegen, und bei dem Leitungsabschnitte (17), deren Achsen im wesentlichen von den Ebenen an den Rändern der entsprechenden Linsen (15) geschnitten werden, mit ihren Mitten im wesentlichen in einer zweiten Ebene oder Schicht liegen.

8. Kollektor nach Anspruch 7, bei dem die Leitungsabschnitte (17) ihre Mittellinien im wesentlichen in der ersten Ebene oder Schicht haben, und bei dem die Leitungsabschnitte (17), die ihre Mittellinien im wesentlichen in der zweiten Ebene oder Schicht haben, für den Durchgang eines wärmeaufnehmenden Fluids durch die entsprechenden Fluidumwälzleitungen getrennt verbindbar oder verbunden sind.

FIG. 1

FIG. 3

FIG. 2

FIG. 4

FIG. 5

0 002 374

FIG. 6

0 002 374